# EUROPEAN PATENT APPLICATION

(11) **EP 2 065 232 A1**
(43) Date of publication of application: **03.06.2009**
(21) Application number: 07121692.3
(22) Date of filing: 27.11.2007
(51) Int. Cl.: B60G 21/055, B62D 33/06, B60G 25/00

(54) **Active roll stabilization (ARS) assembly with improved actuator location, and vehicle suspension assembly provided therewith**

(71) Applicant: Nederlandse Organisatie voor Toegepast- Natuurwetenschappelijk Onderzoek TNO, 2628 VK Delft (NL)
(72) Inventor: Van der Knaap, Albertus C. M, 5706 KX Helmond (NL); Verschuren Robert M. A. F., 5643 PG Eindhoven (NL)
(74) Representative: Hatzmann, Martin

(57) **Abstract**

The invention relates to an ARS (active roll stabilization) assembly for a vehicle. The assembly comprises a torsion bar (6) and a rotation actuator (10) for adjusting a torsion angle and/or torsion moment of said torsion bar. The actuator is arranged near an end of the torsion bar.
The invention furthermore relates to a vehicle suspension assembly provided with such ARS assembly according to the invention.

## Description

The invention relates to an ARS (active roll stabilization) assembly for a vehicle, such as for instance a car, or truck.

Such ARS assembly is known, for instance from EP 1 175 307. The known ARS assembly comprises an adjustable torsion bar, composed of two substantially symmetrical bar segments which are interconnected to each other by means of a rotation actuator. With this rotation actuator, a torsion angle and/or torsion moment of the torsion bar can be adjusted, to counteract external roll motions and/or roll moments, which during use may act on said assembly, for instance when the vehicle takes turns.

A disadvantage of this known ARS assembly is that the actuator may be exposed to rather unfavourable loading conditions, due to external bending moments and other loads acting on the torsion bar during use. The actuator and circuitry needed for the operation thereof may require a considerable amount of space, which may seriously limit the design freedom of the overall vehicle design. Also said circuitry may require complex routing, which complicate installation of the assembly. In particular where the actuator is a hydraulic actuator, relatively long supply and return lines may be needed to connect the actuator to a hydraulic supply means located elsewhere in the vehicle. Such long lines are known to negatively affect the dynamic behaviour of the hydraulic system.

The present invention aims to provide an ARS assembly of the above described type, wherein the disadvantages of the known ARS assemblies are at least partly resolved. To that end an ARS assembly according to the invention is characterized by the features of claim 1.
By arranging the rotation actuator near one end of the torsion bar, the actuator will be exposed to more favourable load conditions. Also, such location may lift the severe design limitations associated with the known ARS assemblies, since near the ends of the torsion bar there may be more space available then near the midst of the torsion bar. Also, the accessibility of the end location may be better than that of the mid-location. This may facilitate installation of the actuator and its operation circuitry and/or supply and return lines. The circuitry or hydraulic supply means may have a less complex layout, with shorter supply and return lines which may benefit the dynamic behaviour, in particular the response time of the hydraulics.

According to one aspect of the invention, the actuator may be arranged between a midsection of the torsion bar and an angled section with which the midsection is coupled to the vehicle. It is noted that an angled section may be an arm-like member that extends from an end of the midsection of the torsion bar in an angle with respect to said midsection towards the vehicle. As such, the actuator can function as a pivot connection between said sections, with a rotary part of the actuator being connected to either one of these sections and a stationary part of the actuator being connected to the other section.

According to an advantageous aspect of the invention, the rotary part of the actuator can be connected to the midsection and the stationary part can be connected to the angled section. The angled section may experience relatively little deformation during use. As a consequence, the stationary actuator part may be fixated directly to said angled section, i.e. without intermediate bearings or the like provision for absorbing bending and/or axial loads and accompanying deformations. This may reduce the complexity, production and maintenance costs of the assembly and increase its robustness and lifetime.

According to yet another advantageous aspect of the invention, the rotary part of the actuator can be detachably connected to the torsion bar, according to the features of claim 6. With such setup, the rotary part can be readily disconnected, for instance for maintenance or replacement purposes.

According to a further aspect of the invention, the assembly may be provided with an additional stabiliser bar, having a torsion axis extending substantially parallel to that of the torsion bar.

This additional torsion bar can provide the ARS assembly with residual roll stiffness when the active roll stabilisation is deactivated, for instance in case of failure of the actuator and/or its control circuitry. This residual stiffness may be sufficiently large to maintain roll motions of the sprung mass within stable margins, so as to allow safe driving of the vehicle.

Furthermore, the stabilizer bar can be arranged to absorb most of the external bending loads, so as to provide the ARS assembly with a stable and robust geometry, wherein the torsion bar and actuator are even better guarded against exposure to bending loads and/or other unfavourable deformation loads. As a result, the torsion bar may be construed with reduced torsion stiffness. This may benefit the ride comfort by decreasing harshness of the vehicle ride, which generally can not be actively controlled by the ARS assembly and as a consequence will mainly depend on said torsion stiffness.

The invention furthermore relates to a vehicle suspension assembly provided with an ARS assembly according to the invention. The suspension assembly may be a primary suspension, for suspending wheels of the vehicle or a secondary suspension, for suspending some other vehicle mass, like for example a truck cabin. In the latter case, the aforementioned additional stabilizer bar may provide some additional advantages. It may for instance help to guide vertical cabin movement. It may furthermore facilitate tilting of the cabin, to provide access to the vehicle's motor.

The vehicle suspension assembly may comprise measurement means for measuring roll motions and/or lateral motions of the sprung vehicle mass. It may furthermore comprise a control unit for controlling the rotation actuator based on a control strategy and data received from said measurement means. The control strategy may for instance be arranged to maintain the vehicle mass substantially horizontally, i.e. parallel to a road surface. This may improve the steering behaviour of the vehicle. Alternatively, the control strategy may be arranged to maintain the vehicle mass parallel to a chassis of the vehicle. This may help to provide a driver with a realistic feeling of the actual vehicle motions and as such may contribute to safer driving behaviour.

Further advantageous embodiments of an ARS assembly according to the invention and a vehicle suspension assembly provided therewith are set forth in the dependent claims.

To explain the invention, exemplary embodiments thereof will hereinafter be described with reference to the accompanying drawings, wherein:
FIG. 1 schematically shows an ARS assembly according to the invention, in top view;
FIG. 2A shows, in top plan view, an alternative embodiment of an ARS assembly according to the invention, with an additional stabilizer bar;
FIG. 2B shows the embodiment of Figure 2A in cross sectional view, taken along line II-II in Figure 2A;
FIG. 3A shows, in top plan view, an alternative embodiment of an ARS assembly according to the invention, wherein the additional stabilizer bar surrounds the torsion bar;
FIG. 3B shows the embodiment of Figure 3A in cross sectional view, taken along line III-III in Figure 3A;
FIG. 4 schematically shows the application of an ARS assembly according to Figure 2A,B in a vehicle suspension assembly, in particular a secondary suspension of a truck;
FIG. 5 shows the truck of Figure 4, in top plan view;
FIG. 6 shows the embodiment of Figure 4 and 5 in further detail; and
FIG. 7 shows the embodiment of Figure 6 in exploded view.

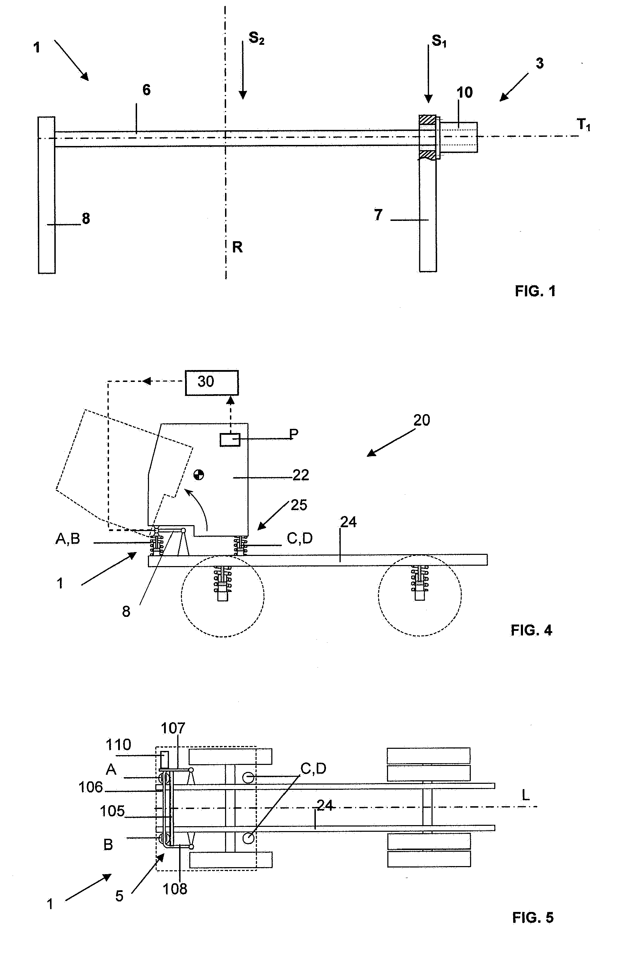

Figure 1 schematically shows a first embodiment of an ARS assembly 1 according to the invention. The active roll stabilizing assembly 1 comprises an adjustable torsion bar 3 and a rotation actuator 10. It is noted that the term "bar" should be interpreted broadly and not be limited to a straight bar. The adjustable torsion bar 3 includes a midsection 6 and two angled sections 7, 8, which can be pivotally connected to a left and right side of a vehicle's suspension assembly. The angled sections 7, 8 comprise two arms that at one end are connected to the midsection 6 of the torsion bar 3 and at the other end are connected to the vehicle's suspension assembly. The respective arms 7, 8 extend from the midsection 6 of the torsion bar 3 in an angle with respect to said midsection 6, which is clearly visible in Figure 1.

The rotation actuator 10 is located near an end of the torsion bar 3, more particularly at the intersection of the midsection 6 and one of the angled sections 7. As such, it divides the torsion bar 3 into two segments S₁, S₂ which are rotatable relative to each other around a torsion axis T₁.

The ARS assembly 1 can be applied in a vehicle suspension assembly, in particular a primary suspension for suspending a vehicle' s wheels to the vehicle's chassis, or a secondary suspension for suspending another vehicle mass to said chassis, for instance a cabin of a truck (as schematically shown in Figures 4-7, which will be described in further detail below).

The ARS assembly 1 then functions as follows. During use, the sprung vehicle mass may be subjected to external roll moments (around axis R in Figure 1) for instance when the vehicle makes a turn. Depending on the rotation direction of this roll moment, the left or right suspension side will experience an increased load while the other side will experience a decrease in load. This external roll moment can be measured, for instance by measuring the lateral motion (displacement, velocity or acceleration) of the sprung vehicle mass. The rotation actuator 10 can thereupon be controlled to rotate the segments S₁, S₂ over a distinct rotation angle around torsion axis T₁. This will cause the torsion bar 3 to exert a counter moment on the vehicle suspension (around axis R, in a direction opposed to that of the external roll moment). Depending on the control strategy this counter moment may for instance be controlled to have a magnitude that substantially matches that of the external roll moment, so as to keep the suspended vehicle mass substantially horizontal, i.e. parallel to the road surface. Alternatively, the counter moment may be controlled to keep the suspended vehicle mass parallel to a chassis of the vehicle. Still other control strategies are possible, depending on for instance the needs of a driver of the vehicle.

The rotation actuator 10 may be a hydraulic actuator and in such case be linked to a hydraulic circuit (not shown) with a hydraulic reservoir, supply and return lines and suitable pumping means and control means, for controlling a flow rate to and from the actuator 10 or the pressure level in said actuator. The pumping means may be driven by the vehicle motor, such as a combustion motor. Alternatively, the pumping means may be driven by a separate motor, for instance an electric motor. Such separate motor allows the actuator 10 to be operated completely independent from the vehicle motor, thus allowing active roll stabilisation to be in action when the vehicle motor is shut off, and vice versa. By switching the motor on and off strategically, energy can be saved while an acceptable level of driving comfort can be maintained.

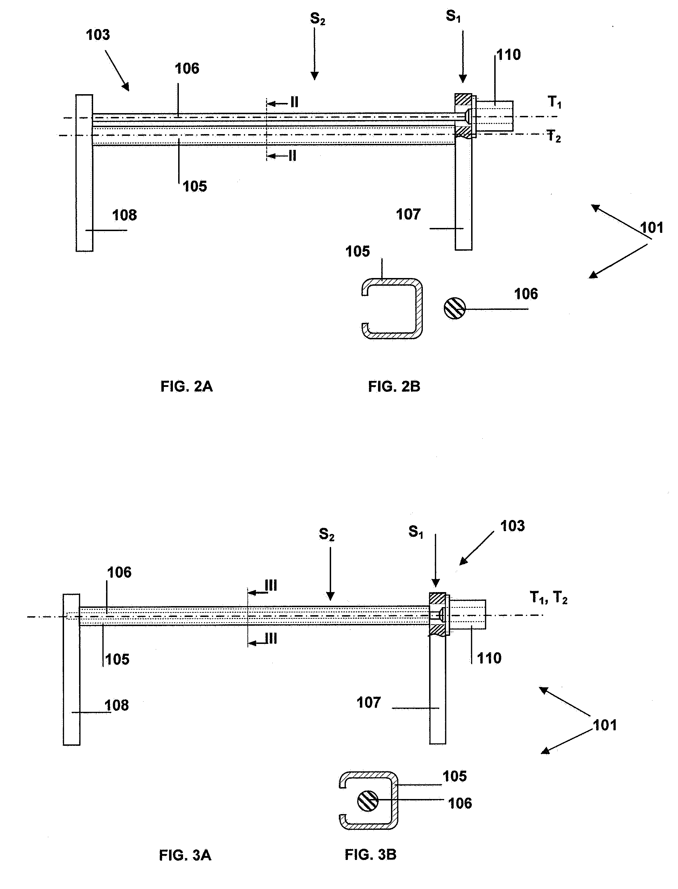

Figures 2A, B show an alternative embodiment of an ARS assembly 1 according to the invention. Parts that are similar to those in Figure 1 are denoted with similar reference numerals, increased by 100. This alternative embodiment differs from the one shown in Figure 1, in that the assembly 101 comprises an additional stabilizer bar 105, which is mounted between the angled sections 107, 108 so as to have its torsion axis T₂ extend substantially parallel to that T₁ of the midsection 6.

Such stabilizer bar 105 may offer several advantages. For one, the stabilizer bar 105 forms a relatively stiff construction together with the angled sections 107, 108 of the torsion bar 103. This relatively stiff construction can withstand external bending loads and minimize deformations in the assembly 101, especially between the midsection 106 and the angled sections 107, 108. Consequently, the rotation actuator 110 can be fixated directly to the relevant segment S₁, S₂, without the need for a bearing or the like provision for absorbing deformation loads. Accordingly the assembly 101 can be less complex, less costly and more robust.

Also it can provide for residual stiffness which may for instance be helpful when the actuator 110 is in failure mode, for instance due to some interruption in the hydraulic circuit. In such case, the flow rate to and from the actuator 110 will generally be blocked by some fail-safe valve known per se. However, fluid will gradually leak away from the actuator 110. As a consequence, a torsion moment built up in the torsion bar 103 will gradually decrease in magnitude. The residual stiffness provided by the stabilizer bar 105 may then provide for sufficient residual stiffness in the roll direction to continue safe driving of the vehicle.

Furthermore, when the ARS assembly 101 according to the invention is applied in a secondary suspension, for suspending for instance a cabin of a truck (as will be described with reference to Figures 4-7), tilting of such cabin may be facilitated. This tilting may be necessary to provide access to the vehicle motor. Normally it will be done with the vehicle motor being shut off, and consequently with the hydraulic circuit being interrupted. The torsion stiffness of the adjustable torsion bar 3; 103 will therefore be close to zero and will provide little stability. Due to space constraints, the means for tilting the cabin usually engage the cabin at one side, i.e. left or right. With the torsion stiffness of the torsion bar 103 being practically zero, it will be understood that such tilting arrangement will cause the cabin to be lifted at one side only. To prevent this, the segments S₁, S₂ of the torsion bar 103 would have to be locked against rotation, with special locking means. Thanks to the stabilizer bar 105 according to the invention, such special locking means can be dispensed with as this stabilizer bar 105 can provide sufficient residual stiffness to allow the cabin to be tilted.

The stabilizer bar 105 may for instance be rod shaped. Alternatively, the stabilizer bar 105 may be construed as a tubular element with an open cross section, e.g. a C-shaped cross section, as shown in Figure 2B. Thanks to such open cross section, the stabilizer bar 105 will have a relatively low torsion stiffness, but a relatively high bending stiffness. Consequently, the contribution of this stabilizer bar 105 to the overall torsion stiffness of the ARS assembly 101 will be small, which means that the actuator 110 will hardly need additional power to rotate the segments S₁, S₂, allowing energy consumption to be low. It furthermore allows the ride comfort to be acceptably good while driving over road irregularities. At the same time, the large bending stiffness can provide for sufficient stability of the stabilizing configuration of which the stabilizer bar 105 forms part.

Figures 3A, B show a further elaboration of the embodiment of Figures 2A, B. Similar parts have been denoted with similar reference numerals. The embodiment differs from the one shown in Figures 2A, B in that the stabilizer bar 105 is arranged to surround the midsection 106 of the torsion bar 103. Apart from the advantages already mentioned with reference to the embodiment of Figures 2A, B the present embodiment offers the advantage that the resulting assembly 101 can be of very compact design. Moreover, as the torsion axes T₁, T₂ of both bars 103, 105 substantially coincide, load distribution on the bars 103, 105 and the rotation actuator 110 may be beneficial, i.e. symmetrically distributed, thus not subjected to additional stresses due to the offset between the centre lines of the torsion bars 103, 105 to the torsion rotation axis of the complete assembly 1.

Figures 4 and 5 show one possible application of an ARS assembly 1 according to the invention. More particularly, the Figures show a truck 20, having a cabin 22 which is suspended to a chassis 24 via a secondary suspension 25, having four suspension members A-D, two at the front and two at the rear of the cabin 22. An ARS assembly 1; 101 according to the invention is provided between the front suspension members A, B. The assembly 1; 101 furthermore comprises measurement means P for measuring roll motions of the cabin 22 and a control unit 30 for controlling the actuator 10; 110 to adjust the torsion angle of the torsion bar 3; 103. Thus, roll motions of the cabin 22 can be adequately suppressed. The ARS assembly 1; 101 further allows for easy tilting of the cabin 22, if the assembly is provided with a stabilizer bar 105 as shown and described with reference to Figures 2A, B and 3A, B. In such case, the assembly 1; 101 can furthermore guide vertical movement of the cabin 22 and keep the cabin 22 fixated to the chassis 24 in the horizontal plane. Also, thanks to the stabilizer bar 5; 105 and its residual stiffness, no changes are needed to the levelling system that is commonly used in a secondary suspension with a conventional (non adjustable) roll stabilizer or cabin guidance assembly.

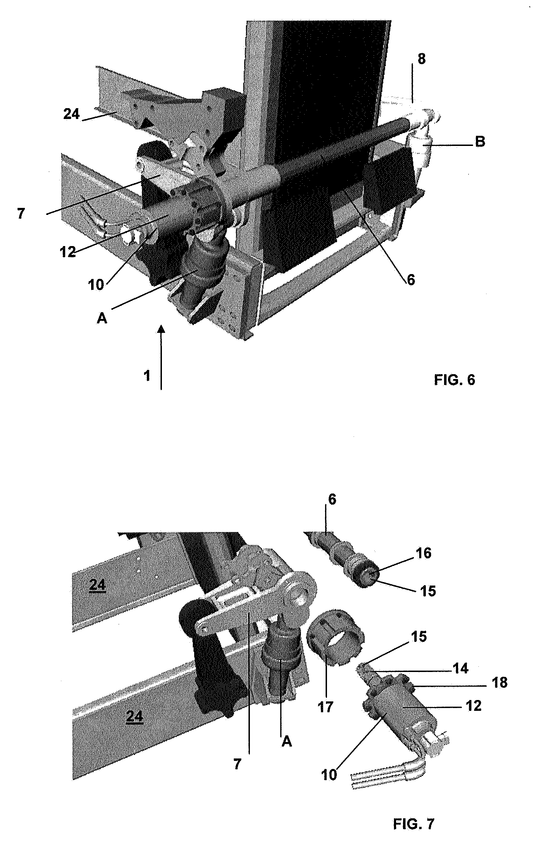

Figures 6 and 7 show in further detail how the rotation actuator 10 of the ARS assembly 1; 101 shown in Figures 4 and 5, can be mounted near an end of the torsion bar 3, according to the present invention. The rotation actuator 10 forms a pivot connection between a midsection 6 of the torsion bar 3 and the angled section 7 with which the midsection 6 is coupled to the vehicle. In the illustrated embodiment, the rotation actuator 10 comprises a stationary house 12, that is fixedly connected to the angled section 7, for instance by means of a bushing 17, a flange 18 and suitable fastening means. The stationary house 12 may instead be fixedly connected to the angled section 7, for instance by bolting or welding or the like. The actuator 10 furthermore comprises a rotary part 14 that in the present embodiment is connected to the midsection 6 by means of a spline connection 15. Of course, other connections are possible. The spline connection 15 ends in a chamber 16, which can be connected to a pressure source (not shown). By increasing the pressure in the chamber 16 the rotary part 14 can be axially displaced, thus allowing said part 14 to be disengaged quite readily, for instance for repair, replacement or maintenance.

The invention is not in any way limited to the exemplary embodiments presented in the description and drawing. All combinations (of parts) of the embodiments shown and described are explicitly understood to be incorporated within this description and are explicitly understood to fall within the scope of the invention. Moreover, many variations are possible within the scope of the invention, as outlined by the claims.

## Claims

1. ARS (active roll stabilization) assembly for a vehicle comprising a torsion bar and an actuator for adjusting a torsion angle and/or torsion moment of said torsion bar, wherein the actuator is a rotation actuator and is arranged near an end of the torsion bar.

2. Assembly according to claim 1, wherein the actuator is arranged to form a pivot connection between a midsection of the torsion bar and an angled section with which the midsection is coupled to the vehicle.

3. Assembly according to claim 2, wherein a rotary part of the actuator is coupled to the midsection.

4. Assembly according to claim 2 or 3, wherein a stationary part of the actuator is coupled to the angled section.

5. Assembly according to anyone of the preceding claims, wherein a stationary part of the actuator is directly coupled to the torsion bar, that is without bearings or the like provisions for absorbing deformation loads.

6. Assembly according to anyone of the preceding claims, wherein a rotary part of the actuator is detachably connected to the torsion bar, the torsion bar being provided with a pressure chamber, located at an axial end of the rotary part and provided with a connection for an external pressure source, allowing the rotary part to be detached from the torsion bar by pressure.

7. Assembly according to anyone of the preceding claims, further comprising a stabiliser bar, with a torsion axis that extends substantially parallel to the one of the torsion bar.

8. Vehicle suspension assembly provided with an ARS assembly according to anyone of the preceding claims, wherein the latter is arranged for active roll motion control of the sprung vehicle mass.

9. Vehicle suspension assembly according to claim 8, comprising:
- measurement means for measuring roll motions and/or lateral motions of the sprung vehicle mass, and
- a control unit for controlling the rotation actuator based on a control strategy and data received from the measurement means,
wherein said control strategy may for instance be arranged to maintain the vehicle mass substantially horizontally, i.e. parallel to a road surface, or to maintain the mass parallel to a chassis of the vehicle.

10. Vehicle suspension assembly according to claim 8 or 9, wherein the vehicle suspension assembly is a primary suspension for suspending a vehicle's wheels.

11. Vehicle suspension assembly according to claim 8 or 9, wherein the vehicle suspension assembly is a secondary suspension for suspending a vehicle mass such as for instance a truck cabin.
